# EUROPÄISCHE PATENTSCHRIFT

(11) **EP 0 393 585 B1**
(45) Veröffentlichungstag und Bekanntmachung des Hinweises auf die Patenterteilung: **04.08.1993**
(21) Anmeldenummer: 90107260.3
(22) Anmeldetag: 17.04.1990
(51) Int. Cl.: B62M 3/08

(54) **Vorrichtung zur lösbaren Befestigung eines Schuhs an einem Fahrradpedal**
Device for releasable fixing of a shoe to a bicycle pedal
Dispositif de fixation d'une chaussure sur une pédale de bicyclette

(30) Priorität: 17.04.1989 DE 3912576
(43) Veröffentlichungstag der Anmeldung: 24.10.1990
(73) Patentinhaber: Look S.A., 58004 Nevers cedex (FR)
(72) Erfinder: Tresorier, Jean Francois, F-58000 Nevers (FR)
(74) Vertreter: Finsterwald, Manfred, Dipl.-Ing., Dipl.-Wirtsch.-Ing.

(56) Entgegenhaltungen:
- DE-A- 3 722 192
- DE-A- 3 831 036

## Beschreibung

Die Erfindung betrifft eine Vorrichtung zur lösbaren Verbindung eines Schuhs an einem Fahrradpedal von der im Oberbegriff des Patentanspruchs 1 angegebenen Art.

Bei bekannten Sicherheitspedalen erfolgt die Fixierung der an der jeweiligen Schuhsohle befestigten und mit dem Pedal zu koppelnden Platine im Regelfall in einer definierten Position, die durch die am Pedalkörper vorgesehene Festaufnahme für einen vorderen Kuppelansatz der Platine und einen elastisch federnden Kuppelhebel bestimmt ist, der in eine am hinteren Bereich der Platine vorgesehene Kuppelausnehmung eingreift und dabei auch eine Zentrierung bewirkt. Eine Verschwenkung des Schuhs in einer horizontalen Ebene ist dabei nur gegen die über Schrägflächen wirksam werdende, am Kuppelhebel angreifende Federkraft möglich, und zwar im Rahmen des Schwenkwinkels, der bis zur Auslösung der Verbindung zwischen Schuh und Pedal durchlaufen werden muß.

Aufgabe der Erfindung ist es, eine Vorrichtung der als bekannt vorausgesetzten Art mit einfachen und ohne besonderen Aufwand zu realisierenden Mitteln dahingehend zu verbessern, daß ohne Beeinträchtigung der Sicherheitsfunktion ein begrenztes, gegen eine sehr geringe Rückstellkraft erfolgendes Verschwenken des mit dem Pedal verbundenen Schuhes in einer Horizontalebene möglich ist und damit auch den individuellen Gegebenheiten des Benutzers hinsichtlich einer subjektiv optimalen Schuhposition Rechnung getragen werden kann.

Gelöst wird diese Aufgabe im wesentlich durch die im kennzeichnenden Teils des Patentanspruchs 1 angegebenen Merkmale.

Durch die Schaffung zusätzlicher, aussenliegender Rückstell-Schrägflächen, die einen wesentlich geringeren Neigungswinkel gegenüber einer parallel zur Pedalachse verlaufenden Vertikalebene besitzen als die für die Sicherheitsfunktion verantwortlichen Auslöse- und Gegenschrägflächen, wird erreicht, daß der Schuh um einen begrenzten Winkel um den unveränderten Platinendrehpunkt geschwenkt werden kann und erst am Ende dieses Schwenkwinkels die eigentlichen Auslöse- und Gegenschrägflächen in Funktion treten. Aufgrund der geringen Neigung der Rückstell-Schrägflächen wird während dieser begrenzten Schwenkbewegung von dem unter Federvorspannung stehenden Kuppelhebel nur ein sehr geringes Rückstellmoment erzeugt, das für den Benutzer einerseits in keiner Weise störend ist, andererseits aber dennoch die auch in diesem Bereich gewünschte Zentrierungsfunktion erbringt.

Nach einer bevorzugten Ausführungsform der Erfindung ist der Abstand zwischen den einander zugeordneten Auslöse- und Gegenschrägflächen kontinuierlich verstellbar. Auf diese Weise ist es möglich, den Schwenkwinkel zwischen der Zentrierposition und dem Wirksamwerden dieser Auslöse- und Gegenschrägflächen variabel zu machen und zwischen einem Maximalwert und dem Wert Null zu verändern, so daß den individuellen Bedürfnissen bestmöglich Rechnung getragen werden kann.

Gemäß einer weiteren Besonderheit der Erfindung, die insbesondere auch unabhängig von den speziellen aussenliegenden Rückstell-Schrägflächen und auch unabhängig von dem Vorhandensein von Auslöse- und Gegenschrägflächen verwendet werden kann, besteht darin, daß der Kuppelhebel an seinem freien Ende zumindest eine bezüglich der Horizontalebene unter einem spitzen Winkel verlaufende Haltefläche aufweist, die mit einer entsprechend geneigten Gegenfläche in der Kuppelausnehmung der Platine zusammenwirkt, wobei die Verklinkung zwischen Kuppelhebel und Platine durch eine von der Vorspannung des Kuppelhebels und der Neigung von Halte- und Gegenfläche abhängige Vertikalkraft lösbar ist.

Die Lösung der Verbindung zwischen Schuh und Pedal erfordert gemäß dieser Ausführungsvariante kein Verschwenken des Schuhs in einer horizontalen Ebene, sondern ermöglicht diesen Lösevorgang durch Aufbringen einer Vertikalkraft, die durch ein entsprechend kräftiges Hochziehen des Fußes erzeugt werden kann.

Weitere besonders vorteilhafte Ausgestaltungen und Merkmale der Erfindung sind in Unteransprüchen angegeben.

Ausführungsbeispiele der Erfindung werden im Folgenden anhand der Zeichnung erläutert; in der Zeichnung zeigt:
- Fig. 1: eine schematische Teil-Draufsicht auf die Unterseite eines Schuhs, dessen sohlenfeste Platine mit einem Sicherheitspedal gekuppelt ist,
- Fig. 2: eine schematische Darstellung einer Detailvariante der Anordnung nach Fig. 1, und
- Fig. 3: eine schematische Teilseitenansicht einer eine Vertikalauslösung gewährleistenden Kupplung von Platine und Pedal.

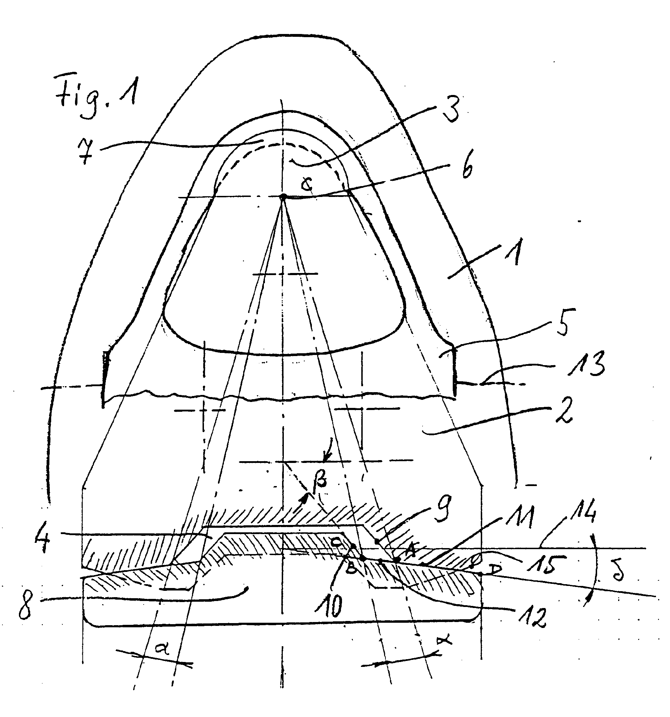

Fig. 1 zeigt die Sohle eines Schuhs 1 mit daran fest angebrachter Platine 2, die an ihrem vorderen Bereich einen Kuppelansatz 3 und an ihrem hinteren Bereich eine Kuppelausnehmung 4 aufweist.

Ein teilweise dargestellter Pedalkörper 5 mit schematisch angegebener Pedalachse 13 besitzt an seinem vorderen Ende eine den Kuppelansatz 3 übergreifende Festaufnahme 7, welche zusammen mit dem Kuppelansatz 3 einen Drehpunkt 6 für die Platine 2 und damit den Schuh 1 festlegt.

Ein am Pedalkörper vorzugsweise schwenkbar gelagerter und unter Federvorspannung stehender Kuppelhebel 8 greift in die Kuppelausnehmung 4 der Platine ein und führt so zu einer Fixierung der Platine bezüglich des Pedalkörpers 5.

Die Kuppelausnehmung 4 weist beiderseits und vorzugsweise symmetrisch zur Mittelachse Auslöseschrägflächen 9 auf, die mit entsprechenden Gegenschrägflächen 10 am Kuppelhebel 8 zusammenwirken, wenn der Schuh, beziehungswweise die Platine 2 in einer Horizontalebene verschwenkt werden. Durch das Zusammenwirken dieser Schrägflächen 9, 10 kann der Kuppelhebel 8 zurückgeschwenkt und außer Eingriff mit der Kuppelausnehmung 4 gebracht werden, so daß dann Schuh und Pedal voneinander getrennt sind.

Wesentlich ist nun, daß die einander zugeordneten Auslöse- und Gegenschrägflächen 9, 10 in Querrichtung des Pedalkörpers beabstandet, bzw. bezogen auf den Drehpunkt 6 um einen Winkel α gegeneinander versetzt sind, und daß zusätzlich außenliegende, miteinander in Eingriff stehende Rückstell-Schrägflächen 11, 12 an Platine 2 und Kuppelhebel 8 vorgesehen sind. Diese Rückstell-Schrägflächen 11, 12 schließen mit einer parallel zur Pedalachse 13 verlaufenden Vertikalebene 14 einen spitzen Winkel δ ein, der wesentlich kleiner ist als der Winkel β zwischen dieser Vertikalebene 14 und den Auslöse- und Gegenschrägflächen 9, 10. Vorzugsweise beträgt der Winkel δ etwa 5°, während der Winkel β ein Wert von 30° besitzt.

Um die Trennung von Platine und Pedal im Falle eines Auslösevorgangs zu begünstigen, gehen die Rückstellschrägflächen 11 an der Platine 2 im Außenbereich der Platine in vergleichsweise kurze Ausschwenkflächen 15 über.

Wenn der Schuh und damit die Platine 2 um den Drehpunkt 6 um einen Winkel α verschwenkt wird, bewegt sich die Rückstellschrägfläche 11 längs der Rampe B-D der am Kuppelhebel 7 ausgebildeten zugehörigen Rückstellschrägfläche 12, wobei sich aufgrund der geringen Neigung dieser Schrägflächen der Kuppelhebel 8 nur in einem sehr geringen Ausmaß bewegt und als Folge davon die zugehörige Feder nur wenig komprimiert wird, so daß sich auch nur ein geringes Rückstellmoment ergibt.

Dies bedeutet, daß bezüglich des Beins des Radfahrers nur ein sehr geringes, praktisch kaum merkbares Drehmoment ausgeübt wird und er den Fuß bei eindeutiger Fixierung am Pedalkörper in der Horizontalebene bezüglich der Mittenebene des Pedals um einen Winkel von 2 x α verschwenken kann. Damit wird den individuellen anatomischen Bewegungsgegebenheiten des jeweiligen Fahrers bestmöglich Rechnung getragen und dennoch ein geringes Rückstellmoment erzeugt, das es ermöglicht, den Schuh gezielt in die definierte Mittenposition zurückzuführen.

Nach Durchlaufen des Schwenkwinkels α kommen die Auslöse- und Gegenschrägflächen 9, 10 miteinander in Berühung, und bei Fortsetzung der Schwenkbewegung erfolgt dann das bekannte Zurückschwenken des Kuppelhebels und das Lösen der Platine von dem Pedalkörper, wie es im Falle des Anhaltens gezielt vorgenommen werden kann oder in einer Notsituation gefordert ist.

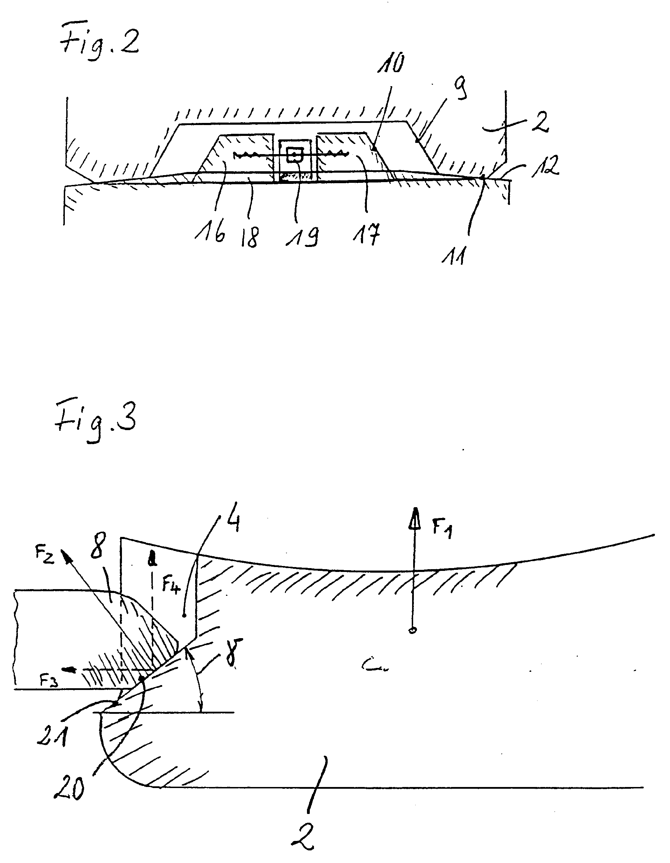

Die schematische Darstellung nach Figur 2 zeigt eine Variante der Erfindung, bei der der Abstand zwischen den Auslöseschrägflächen 9 und Gegenschägflächen 10 verstellbar und damit der in Figur 1 gezeigte Schwenkwinkel α veränderbar ist.
Zu diesem Zweck sind die Gegenschrägflächen 10 an in einer Führung 18 verschiebbaren Schiebegliedern 16, 17 ausgebildet, welche über ein Betätigungsorgan 19 gegensinnig verschoben werden können. Auf diese Weise ist es möglich, den Schwenkwinkel α zwischen einem Maximalwert und dem Wert Null, der einer Blocksituation entspricht, zu verstellen.

Figur 3 zeigt eine Variante einer Kupplung zwischen sohlenfesten Platine 2 und einem Fahrradpedal unter Verwendung eines Kuppelhebels 8, der in Verbindung mit der in der Platine vorgesehenen Kuppelausnehmung 4 unter bestimmten Bedingungen ein Lösen der Verbindung durch Aufbringen einer Vertikalkraft F1 ermöglicht.

Diese Ausführungsform ist von Vorteil bei bestimmten Typen von Fahrrädern, wie z.B. Geländefahrrädern, sowie für Personen, denen die Durchführung eines Auslösevorgangs mittels einer Horizontalverschwenkung des Schuhs Schwierigkeiten bereitet und für die es einfacher ist, die Verbindung durch einen kräftigen Vertikalzug mittels des Beines zu lösen.

Der Kuppelhebel 8 ist dazu an seinem freien Ende mit einer bezüglich der Horizontalebene unter einem spitzen, vorzugsweise etwa 45° betragenden Winkel verlaufenden Haltefläche 20 versehen, die mit einer entsprechend geneigten Gegenfläche 21 in der Kuppelausnehmung 4 der Platine 2 zusammenwirkt.

Wird auf die Platine 2 eine Zugkraft F1 ausgeübt, so wird diese Kraft F1 aufgrund der schräg verlaufenden Flächen 20, 21 in einer senkrecht auf diesen Flächen 20, 21 stehenden Kraft F2 wirksam, welche wiederum zerlegt wird in eine vertikale Zugkraft F4 und in eine den Kuppelhebel 8 zurückstoßende Kraft F3. Ist diese Kraft F3 ausreichend groß, um die Haltekraft der an Kuppelhebel 8 wirksam werdenden Feder zu überwinden, dann erfolgt ein Trennen von Platine 2 und Kuppelhebel 8 und somit ein Lösen des Schuhs vom Pedalkörper.

## Patentansprüche

1. Vorrichtung zur lösbaren Befestigung eines Schuhs (1) an einem Fahrradpedal, bestehend aus einer sohlenfesten Platine (2), die einen vorderen Kuppelansatz (3) und eine hintere Kuppelausnehmung (4) mit wenigstens einer seitlichen Auslöseschrägfläche aufweist, einer im vorderen Bereich des Pedalkörpers (5) vorgesehenen, den Kuppelansatz (3) zur Bildung eines Drehpunkts (6) übergreifenden Festaufnahme und einem im hinteren Bereich des Pedalkörpers (5) vorgesehenen, elastisch federnden Kuppelhebel (8), der in die Kuppelausnehmung (4) eingreift und mit zumindest einer mit der zugehörigen Auslöseschrägfläche (9) der Kuppelausnehmung (4) bei einem Verschwenken der Platine (2) um den Drehpunkt (6) zusammenwirkenden Gegenschrägfläche (10) versehen ist,
dadurch **gekennzeichnet,**
daß zusätzlich zu den innenliegenden, gegenseitig einen vorgebbaren Abstand aufweisenden Auslöse- und Gegenschrägflächen (9, 10) zumindest auf einer Seite von Platine (2) und Kuppelhebel (8) miteinander in Eingriff stehende, außenliegende Rückstellschrägflächen (11, 12) vorgesehen sind, die mit einer parallel zur Pedalachse (13) verlaufenden Vertikalebene (14) einen spitzen Winkel (δ) einschließen, der wesentlich kleiner ist als der Winkel (β) zwischen dieser Ebene (14) und den Auslöse- und Gegenschrägflächen (9, 10).

2. Vorrichtung nach Anspruch 1,
dadurch **gekennzeichnet,**
daß die Rückstellschrägflächen (11, 12) bezüglich der Platinenmitte symetrisch gelegen sind und zentrierend wirken.

3. Vorrichtung nach Anspruch 1 oder 2,
dadurch **gekennzeichnet,**
daß sich an die an der Platine (2) vorgesehenen Rückstellschrägflächen (11) zum Außenrand der Platine (2) hin gegensinnig verlaufende Ausschwenkflächen (15) anschließen, die vergleichsweise kurz ausgebildet sind.

4. Vorrichtung nach Anspruch 4,
dadurch **gekennzeichnet,**
daß der den Auslöseschrägflächen (9, 10) zugeordnete Winkel (β) etwa 30° und der den Rückstellschrägflächen (11, 12) zugeordnete Winkel (δ) etwa 5° beträgt.

5. Nach einem der vorhergehenden Ansprüche,
dadurch **gekennzeichnet,**
daß der Abstand zwischen den einander zugeordneten Auslöseschrägflächen (9, 10) kontinuierlich verstellbar ist.

6. Vorrichtung nach Anspruch 5,
dadurch **gekennzeichnet,**
daß die am Kuppelhebel (8) vorgesehenen Auslöseschrägflächen (10) an am Kuppelhebel (8) geführten und über ein Betätigungsorgang (19) gegensinnig verstellbaren Schiebegliedern (16, 17) ausgebildet sind.

7. Vorrichtung zur lösbaren Befestigung eines Schuhs an einem Fahrradpedal, nach einem oder mehreren der vorhergehenden Ansprüche,
dadurch **gekennzeichnet,**
daß der Kuppelhebel (8) an seinem freien Ende zumindest eine bezüglich der Horizontalebene unter einem spitzen Winkel verlaufende Haltefläche (20) aufweist, die mit einer entsprechend geneigten Gegenfläche (21) in der Kuppelausnehmung (4) der Platine (2) zusammenwirkt und daß die Verklinkung zwischen Kuppelhebel (8) und Platine durch eine von der Vorspannung des Kuppelhebels (8) und der Neigung von Halte- bzw. Gegenfläche (20, 21) abhängige Vertikalkraft lösbar ist.

8. Vorrichtung nach Anspruch 7,
dadurch **gekennzeichnet,**
daß der Neigungswinkel (γ) von Halte- und Gegenfläche (20, 21) etwa 45° beträgt.

9. Vorrichtung nach Anspruch 7 oder 8,
dadurch **gekennzeichnet,**
daß der Kuppelhebel (8) über seine Haltefläche (20) auf einem Teilbereich der größer ausgebildeten Gegenfläche (21) aufliegt.

## Claims

1. Apparatus for the releasable securing of a shoe (1) to a bicycle pedal comprising a fixed plate (2) at the sole having a front coupling projection (3) and a rear coupling recess (4) with at least one lateral inclined release surface, a fixed recess provided in the front region of the pedal body (5) and engaging over the coupling projection (3) to form a pivot point (6) and an elastically resilient coupling lever (8) provided in the rear region of the pedal body (5) and engaging into the coupling recess (4), there being provided at least one inclined counter surface (10) which cooperates with the associated inclined release surface (9) of the coupling recess (4) on a pivotal movement of the plate (2) about the pivot point (6),
characterised in that,
in addition to the inwardly disposed inclined release and counter surfaces (9, 10) which have a mutual predeterminable spacing, outwardly disposed inclined resetting surfaces (11, 12) which are in engagement with one another are provided at least on one side of the plate (2) and coupling lever (8) and include, with a vertical plane (14) extending parallel to the pedal axis (13), an acute angle (δ) which is substantially smaller than the angle (β) between this plane and the inclined release and counter surfaces (9, 10).

2. Apparatus in accordance with claim 1,
characterised in that
the inclined resetting surfaces (11, 12) are symmetrically disposed with respect to the centre of the plate and operate in a centering manner.

3. Apparatus in accordance with claim 1 or claim 2,
characterised in that
outward pivoting surfaces (15) which are comparatively short and which run in opposite directions to the outer edge of the plate (2) adjoin the inclined resetting surfaces (11) provided on the plate (2).

4. Apparatus in accordance with claim 4,
characterised in that
the angle (β) associated with the inclined release surfaces (9, 10) amounts to approximately 30° and the angle (4) associated with the inclined resetting surfaces (11, 12) amounts to approximately 5°.

5. In accordance with one of the preceding claims,
characterised in that
the spacing between the mutually associated inclined release surfaces (9, 10) is continuously adjustable.

6. Apparatus in accordance with claim 5,
characterised in that
the inclined release surfaces (10) provided on the coupling lever (8) are formed on translatable members (16, 17) which are guided on the coupling lever (8) and mutually adjustable via an actuating member (19).

7. Apparatus for the releasable securing of a shoe to a bicycle pedal in accordance with one or more of the preceding claims,
characterised in that
the coupling lever (8) has at its free end at least one retaining surface (20) extending at an acute angle with respect to the horizontal plane and which cooperates with a correspondingly inclined counter surface (21) in the coupling recess (4) of the plate (2); and in that the latching between the coupling lever (8) and the plate is releasable through a vertical force which is dependent on the biasing of the coupling lever (8) and the inclination of the retaining and/or counter surface (20, 21).

8. Apparatus in accordance with claim 7,
characterised in that
the angle of inclination (γ) of the holding- and counter surface (20, 21) amounts to approximately 45°.

9. Apparatus in accordance with claim 7 or claim 8,
characterised in that
the coupling lever (8) contacts a partial region of the larger counter surface (21) via its retaining surface (20).

## Revendications

1. Dispositif pour la fixation détachable d'une chaussure (1) sur une pédale de bicyclette, consistant en une platine (2) fixée à la semelle, et qui présente une saillie d'accouplement avant (3) et un évidement d'accouplement arrière (4), avec au moins une surface oblique latérale de déclenchement, un logement fixe prévu dans la zone avant du corps de pédale (5) et recouvrant la saillie d'accouplement (3) pour former un point de rotation (6), et un levier d'accouplement (8), faisant ressort, prévu dans la zone arrière du corps de pédale (5), et qui pénètre dans l'évidement d'accouplement (4) et qui est muni d'au moins une contre-surface oblique (10) coopérant avec la surface oblique de déclenchement (9) correspondante de l'évidement d'accouplement (4) lors d'un basculement de la platine (2) autour du point de rotation (6), caractérisé en ce qu'il est prévu, outre la surface oblique de déclenchement et la contre-surface oblique (9, 10) situées à l'intérieur et présentant mutuellement un écartement donné, au moins sur un côté de la platine (2) et du levier d'accouplement (8) des surfaces obliques de rappel (11, 12) situées à l'extérieur et, en prise entre elles, qui définissent un angle aigu (δ) avec un plan vertical (14) s'étendant parallèlement à l'axe de pédale (13), cet angle étant sensiblement plus petit que l'angle (β) entre ce plan (14) et la surface oblique de déclenchement et la contre-surface oblique (9, 10).

2. Dispositif selon la revendication 1, caractérisé en ce que les surfaces obliques de rappel (11, 12) sont disposées symétriquement par rapport au centre de la platine et qu'elles ont un effet de centrage.

3. Dispositif selon la revendication 1 ou 2, caractérisé en ce que des surfaces de pivotement (15), qui sont conçues relativement courtes, qui s'étendent en sens inverse par rapport au bord extérieur de la platine (2), se raccordant aux surfaces obliques de rappel (11) prévues sur la platine (2).

4. Dispositif selon la revendication 4, caractérisé en ce que l'angle (β) associé aux surfaces obliques de déclenchement (9, 10) est d'environ 30° et en ce que l'angle (6) associé aux surfaces obliques de rappel (11, 12) est d'environ 5°.

5. Dispositif selon l'une quelconque des revendications précédentes, caractérisé en ce que l'écartement entre les surfaces obliques de déclenchement (9, 10) associées l'une à l'autre est réglable de manière continue.

6. Dispositif selon la revendication 5, caractérisé en ce que les surfaces obliques de déclenchement (10) prévues sur le levier d'accouplement (8) sont réalisées sur des éléments coulissants (16, 17) guidés sur le levier d'accouplement (8) et mobiles en sens inverse par l'intermédiaire d'un organe d'actionnement (19).

7. Dispositif pour la fixation détachable d'une chaussure sur une pédale de bicyclette selon l'une ou plusieurs des revendications précédentes, caractérisé en ce que le levier d'accouplement (8) présente à son extrémité libre au moins une surface de retenue (20) s'étendant en formant un angle aigu par rapport au plan horizontal, cette surface coopérant avec une contre-surface (21) inclinée de manière correspondante dans l'évidement d'accouplement (4) de la platine (2), et en ce que l'encliquetage entre levier d'accouplement (8) et platine peut être supprimé par une force verticale dépendant de la prétension du levier d'accouplement (8) et de l'inclinaison de la surface de retenue et de la contre-surface (20, 21).

8. Dispositif selon la revendication 7, caractérisé en ce que l'angle d'inclinaison (τ) de la surface de retenue et de la contre-surface (20, 21) est d'approximativement 45°.

9. Dispositif selon la revendication 7 ou 8, caractérisé en ce que le levier d'accouplement (8) repose par l'intermédiaire de sa surface de retenue (20) sur une zone partielle de la contre-surface (21) réalisée plus grande.
